(19) Europäisches Patentamt
European Patent Office
Office européen des brevets

(11) **EP 2 056 253 A1**

(12) **EUROPEAN PATENT APPLICATION**
published in accordance with Art. 153(4) EPC

(43) Date of publication:
**06.05.2009 Bulletin 2009/19**

(51) Int Cl.:
***G06T 5/00*** (2006.01)

(21) Application number: **07803673.8**

(22) Date of filing: **02.08.2007**

(86) International application number:
**PCT/ES2007/070147**

(87) International publication number:
**WO 2008/020109 (21.02.2008 Gazette 2008/08)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **03.08.2006 ES 200602116**

(71) Applicants:
• **Consejo Superior de Investigaciones Cientificas
(CSIC)
28006 Madrid (ES)**

• **Universidad de Granada
18071 Granada (ES)**

(72) Inventors:
• **DE LA PORTILLA MUELAS, Javier
28006 Madrid (ES)**
• **DORRONSORO DÍAZ, Carlos
28006 Madrid (ES)**
• **GUERRERO COLÓN, José Antonio
18071 Granada (ES)**

(74) Representative: **Pons Arino, Angel
Glorieta Ruben Dario 4
28010 Madrid (ES)**

(54) **METHOD FOR RESTORATION OF IMAGES WHICH ARE AFFECTED BY IMPERFECTIONS, DEVICE FOR IMPLEMENTATION OF THIS, AND THE CORRESPONDING APPLICATIONS**

(57) Procedure for restoring images obtained with image capture devices starting from the characterisation of degradation by means of the point spread function (PSF) in one or several positions of the plane of the object and, possibly, for one or several focus positions, and also the noise power spectral density (PSD). The procedure is applied in two steps: (1) pre-filtration of minimum squared error for compensation of blurring caused by the PSF; and (2) elimination of noise. Optimisation can be performed according to the model of error of the noise elimination (2) or, in absence of this model, empirically with a filter where the free parameter is optimised for a set of training original/degraded image pairs and of pairs (PSF/noise PSD).

**FIG 1**

## Description

## FIELD OF THE INVENTION

This invention applies to the field of image manipulation, more specifically, of post-processing of images obtained with capture devices (typically opto-electronic), for any electromagnetic spectrum band (visible, infrared, etc.).

## STATE OF THE ART

Currently there are many devices available to users for capturing digital images. From high precision professional cameras in infrared or visible light to small webcams, PDAs, mobile telephones, etc.

The restoration of images is a classical problem which attempts to estimate the original images from a degraded observation, usually assuming that this comes from performing a linear filtration of the original with a kernel and adding noise independently to the result. In the literature [R. Molina, J. Mateos, A.K. Katsaggelos, and M. Vega, "Bayesian multichannel image restoration using compound gauss-markov random fields," IEEE Trans. Image Proc., vol. 12, no. 12, pp. 1642-1654, Dec. 2003; M. Figueiredo and R. Nowak, "A bound optimization approach to wavelet-based image deconvolution," in IEEE Int'l Conf on Image Proc, 2005, vol. 2, pp. 782-785.; J. Bioucas-Dias, "Bayesian wavelet-based image deconvolution: a gem algorithm exploiting a class of heavy-tailed priors," IEEE Trans. Image Proc., vol. 15, no. 4, pp. 937-951, Apr. 2006; M. R. Banham and A. K. Katsaggelos, "Spatially adaptive wavelet-based multiscale image restoration," IEEE Trans. Image Proc., vol. 5, pp. 619-634, Apr. 1996.; R. Neelamani, H. Choi, and R. G. Baraniuk, "ForWaRD: Fourier-wavelet regularized deconvolution for ill-conditioned systems," IEEE Trans. Signal Proc., vol. 52, no. 2, pp. 418-433, Feb. 2004.; J. Kalifa and S. Mallat, "Mini-max restoration and deconvolution," in Bayesian inference in wavelet based methods. Springer, 1999.; A. Jalobeanu, N. Kingsbury, and J. Zerubia, "Image deconvolution using hidden markov tree modeling of complex wavelet packets," in IEEE Int'l Conf on Image Proc, vol. 1, pp. 201-204, 2001.], there are many methods that address this problem, which in some cases, as here, presuppose known sources of degradation.

In the scientific field, the majority of the algorithms that provide good results are iterative in character and computationally intensive, which in practice limits their application in real-time processing conditions, and so they are often applied to simulated degraded images that are processed "off-line". [R. Molina, J. Mateos, A.K. Katsaggelos, and M. Vega, "Bayesian multichannel image restoration using compound gauss-markov random fields," IEEE Trans. Image Proc., vol. 12, no. 12, pp. 1642- 1654, Dec. 2003; M. Figueiredo and R. Nowak, "A bound optimization approach to wavelet-based image deconvolution," in IEEE Int'l Conf on Image Proc, 2005, vol. 2, pp. 782 - 785.; J. Bioucas-Dias, "Bayesian wavelet-based image deconvolution: a gem algorithm exploiting a class of heavy-tailed priors," IEEE Trans. Image Proc., vol. 15, no. 4, pp. 937-951, Apr. 2006.]. Other algorithms, seeking greater processing efficiency, separate the problem into two steps [M. R. Banham and A. K. Katsaggelos, "Spatially adaptive wavelet-based multiscale image restoration," IEEE Trans. Image Proc., vol. 5, pp. 619-634, Apr. 1996.; R. Neelamani, H. Choi, and R. G. Baraniuk, "ForWaRD: Fourier-wavelet regularized deconvolution for ill-conditioned systems," IEEE Trans. Signal Proc., vol. 52, no. 2, pp. 418-433, Feb. 2004.; J. Kalifa and S. Mallat, "Mini-max restoration and deconvolution," in Bayesian inference in wavelet based methods. Springer, 1999.; A. Jalobeanu, N. Kingsbury, and J. Zerubia, "Image deconvolution using hidden Markov tree modeling of complex wavelet packets," in IEEE Int'l Conf on Image Proc, vol. 1, pp. 201-204, 2001.], one which compensates for blurring and a second that tries to eliminate the resulting noise.

In the technical sphere, there are some patents related to the present invention. Biggs and Meichle [Biggs David and Meichle Michael, "Realtime 2D deconvolution system and method", US2005265621, 2005-12-01; Pohle Richard and Reiley Michael, "Three-dimensional imaging with multiframe blind deconcolution", W02005076774-2005-08-25.] propose various systems of estimating the point spread function (hereinafter called PSF), for subsequent use in the restoration of images in various spheres, microscopic images in the case of Biggs and Meichle [Biggs David and Meichle Michael, "Realtime 2D deconvolution system and method", US2005265621, 2005-12-01] and atmospheric images in the case of Pohle and Reiley [Pohle Richard and Reiley Michael, "Three-dimensional imaging with multiframe blind deconcolution", WO2005076774-2005-08-25.]. A similar approximation is presented in [Kitamura Yoshiro, "Method, apparatus, and program for image processing", US2005249429, 2005-11-10] in which a methodology for measuring PSFs is claimed for its subsequent use in restoration. Atherton [Atherton Timothy, "Deconvolution of a digital image", EP1522961-2005-04-13] claims a system that uses metadata of the capture device in question (manufacturer's information of the camera, model, lens aperture configuration (f number), aperture value, focal length, focal resolution in both directions (x,y), etc.) in combination with the optical transfer function (OTF) to restore images captured by these devices. In this aspect, the philosophy of this patent above is very similar to the present invention as it uses a prior characterisation of the capture device (although with a different set of parameters) and later, this information is used for post-processing the image. It is in the processing that significant differences are to be found, such as for example the processing scheme, global in their case and based on two steps (global or local in the first step, local in the second step) in that of the present invention. Our invention, in contrast to the patent referenced above, also performs compensation for spatially variable blurring. A special field of application of the procedure of the present invention, where the PSF is known a *priori* and can be used, together with the characterisation of noise, to restore the captured image, is that called "wavefront coding" [George Nicholas, Chi Wanli, "Extended depth of field using a multi-focal length lens with a controlled range of spherical aberration and centrally obscured aperture", W02006028527-2006-03-16]. These types of application use low cost optics with the unusual feature that their PSF varies very little over a broad focus range in the optical axis. In this way, a great depth of field is achieved at the cost of introducing a PSF that must be numerically compensated.

## DESCRIPTION OF THE INVENTION

### Short Description

An object of the invention is a procedure for restoration of images for image capture systems that introduce noise and blurring into the images, hereinafter called the procedure of the invention, that, given a method of noise elimination in images and the capture device for all of its possible functioning modes, is **characterised in that** it includes:

> a) the measurement of the degradation introduced by the capture device by means of two groups of parameters: PSFs (Point Spread Function) and noise PSDs (Power Spectral Density),
> b) the capture of the image,
> c) the calculation of the optimum pre-filtration for the degradation parameters characterised in (a) and for the image captured in (b) or on average, for a set of training images that minimises the average squared error at the output of the noise elimination method applied to the pre-filtered images,
> d) the storage in non-volatile memory prior to the operation of the device of two sets of parameters characterising the degradation introduced by the capture device, according to the following alternatives:
>
>> i) measured degradation parameters in (a), PSFs and noise PSD (in this case, the calculation of the optimum pre-filtering of (c) is made at operation time and is not stored in non-volatile memory), or
>> ii) optimum pre-filters calculated according to (c) using training images and corresponding noise PSDs,
>
> e) the application of the pre-filtration calculated in (c) to the image obtained in (b), and
> f) the application of the noise elimination method to pre-filtered images obtained in (e).

A particular object of the invention is the procedure of the invention in which the calculation method of the optimum pre-filtration in (c) is based on the existence of a model for predicting the squared error of the noise elimination method, which approximates the squared error as the sum of two squared errors, the first corresponding to the residual blurring of the result (estimated by standard techniques) and the second corresponding to the residual error of the result with respect to the image at the output of pre-filtration, that latter calculable by the squared error model of the noise elimination method.

Another object of the invention is the procedure of the invention in which an approximation to the optimum pre-filtration method of (c) is obtained, which comprises the following stages:

> a) use of a pre-filtration depending on a single free parameter, and
> b) a training stage, where given one or several degradation conditions expressed as pairs (PSF/noise PSDs) and a set of pairs of original/degraded images, obtaining, for each pair of original/degraded images the value of the free parameter that minimises the squared error in restoration and a security interval around this value within which the squared error falls below a specific level of fidelity (typically around 0.1 decibels) with respect to the optimum found, and
> c) selection of the optimum parameter on average as that value of the free parameter that maximises the number of experiments for which said value does not exceed the safety interval corresponding to each experiment.

Another specific object of the invention is the procedure of the invention in which, for each of the possible functioning modes of the image capture device a single PSF (typically that corresponding to the optical axis and the image plane of best focus in optical systems) and a single noise PSD are used.

Another specific object of the invention is the procedure of the invention in which, in each of the possible function modes of the image capture device, a single noise PSD and various PSFs corresponding to different spatial positions of the field is used, reflecting variable spatial behaviour of the capture device and which gives rise to a differential pre-filtration for each spatial location within the captured image.

Another specific object of the invention is the procedure of the invention in which, the PSFs corresponding to various focus positions, for each position considered to be in the image plane, together with the noise PSD are added to the device characterisation, which gives rise to a different pre-filtration for each focus position and each spatial location within the captured image.

Another specific object of the invention is the procedure of the invention in which the calculation of the optimum pre-filtration is made with training images in place of with the captured image and in which, for each of the possible functioning modes of the image capture device, the following are stored in memory:

> a) calculated pre-filters for a set of training images in place of the PSFs, and
> b) PSDs resulting from the noise pre-filtration with their corresponding pre-filters, in place of the original PSD.

Another specific object of the invention is the procedure of the invention in which the selection of the parameters stored previously in the non-volatile memory and access and use in real time is made according to:

> a) the functioning mode of the capture device
> b) the spatial position in the plane of the image
> c) information available on the state of focus of the capture device.

Another object of the present invention is a generic device of the hybrid, opto-electronic system that accommodates the elements required for the operation of the procedure of the invention, hereinafter called the device of the invention, which comprises:

> A) Opto-electronic device or capture body, which comprises an optical system of lenses (A1), an electronic acquisition sensor (A2) including a detector matrix (A21) and the reading electronics (A22), and a digital recording system (A3).
> B) a hardware-firmware processing unit (B1), which has a memory (B12), where the required data are stored, and a digital microprocessor (B11), which executes the instructions on the data previously stored (characterisation of the degradation sources) and those captured by the sensor. Note that the capture device and the processing system do not have to be in the same physical device.
> C) Peripheral viewer for the final obtained image.

## Detailed description

The present invention addresses the problem of providing new tools for image restoration in opto-electronic devices.

The present invention arose because the inventors observed that it was possible to increase the quality of digital images captured with opto-electronic devices equipped with low cost optics. The devices are affected by imperfections in the optical system as well as by the noise generated by the opto-electronic capture device and the image quality can be improved by using numerical post-processing based on characterisation both of the optical system and statistical noise parameters generated by the sensor (e.g. CCDs) and/or other sources of photo-electronic noise (see Examples 2 and 3).

To do this, a description of the optics is used, starting from the characterisation of the image degradation by means of the Point Spread Function (hereinafter called PSF) in one or several positions of the plane of the object and, possibly, for one or several focus positions; and the Power Spectral Density (hereinafter called PSD) of the noise introduced by the capture device (Example 1). In order to estimate the PSF of the optics and the noise PSD of the capture device for each functioning mode, it is necessary to characterise the capture device in controlled conditions that are as close as possible to the conditions of normal use. The quality of the final processed images will depend largely on the quality of the calibration.

The strategy of the present invention is along the same lines as the two-step procedures described above -compensation for the blurring and subsequent elimination of the resulting noise- with two important innovations: (1) both steps are formally linked, through the estimation of an optimised blurring compensation filter that minimises the squared error at the output of the second step (noise elimination), and (2) a method for compensating for optical degradations that vary with the spatial position is provided [J.A. Guerrero-Colon and J. Portilla, "Two-level adaptive denoising using Gaussian scale mixtures in overcomplete oriented pyramids," in IEEE Int'l Conf on Image Proc. Italy, Sep.2005, vol. I, pp. 105-108; J.A. Guerrero-Colon and J. Portilla, "Deblurring-by-denoising using spatially adaptive Gaussian scale mixtures in overcomplete pyramids," in IEEE Int'l Conf on Image Proc. Atlanta, Oct. 2006, Publication after October 2006].

Specifically, the restoration procedure of the invention is based on the following degradation model:

$$\mathbf{y_0} = \mathbf{H}\,\mathbf{x} + \mathbf{w_0}, \quad (1)$$

where **H** is a circulant matrix that performs the convolution of **h** (the response to the impulse that typically models the optical response, or PSF, initially considered spatially invariant), with the original image **x,** in this case the captured scene. The vector **w₀** represents noise independent of the signal, of zero average and of known power spectral density (PSD) $P_{w0}$. In the Fourier domain, the observation has the following expression:

$$Y_o(u,v) = H(u,v) \cdot X(u,v) + W_o(u,v) \quad (2)$$

with *H(u,v)* the Fourier transform of the filter **h.**

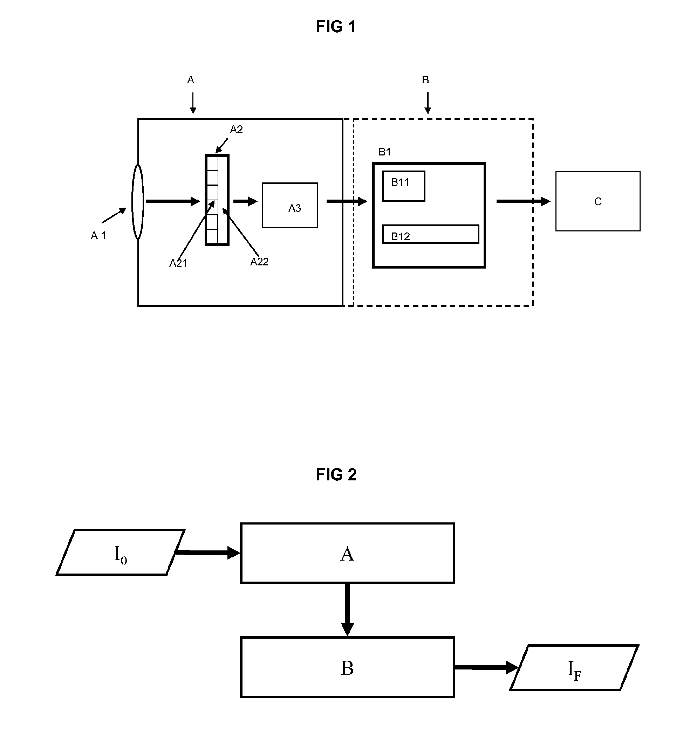

The objective is to obtain as reliable an estimate as possible of **x** starting from **y₀,** in terms of the squared error, considering the PSF (filter **h**) and the PSD of the noise $P_{w0}$ to be known. This is done by using the scheme shown in Figure 2. The first step comprises a global blurring compensation by the application of a pre-filter *G*. This filter is a regularised approximation to the inverse filter of *H*, that is, *GH* is approximately 1, except in the frequencies where the noise amplitude exceeds the signal by a broad margin. The second step tries to eliminate the noise of the observation filtered with *G,* typically using non-linear methods (e.g. [J. Portilla, V. Strela, M. Wainwright, and E. P. Simoncelli, "Image denoising using scale mixtures of Gaussians in the wavelet domain," IEEE Trans. Image Proc., vol. 12, pp. 1338-1351, Nov. 2003.; J.A. Guerrero-Colon and J. Portilla, "Two-level adaptive denoising using Gaussian scale mixtures in overcomplete oriented pyramids," in IEEE Int'l Conf on Image Proc. Italy, Sep. 2005, vol. I, pp. 105-108.]). Applying the first step of the method to expression (2), we obtain in the domain of spatial frequency (ignoring the indices of the frequency u,v to simplify the notation):

$$Y_1 = G \cdot Y_o = G \cdot H \cdot X + G \cdot W_o = G \cdot H \cdot X + W_1 \quad (3)$$

Note that the new noise term, $W_1$, is affected by the compensation pre-filter G, so that it will not in general be treated as white noise (although it was initially so considered) and therefore noise elimination methods will be required that are able to handle non-planar PSDs (such as [J. Portilla, V. Strela, M. Wainwright, and E. P. Simoncelli, "Image denoising using scale mixtures of Gaussians in the wavelet domain," IEEE Trans. Image Proc., vol. 12, pp. 1338-1351, Nov. 2003.; J.A. Guerrero-Colon and J. Portilla, "Two-level adaptive denoising using Gaussian scale mixtures in overcomplete oriented pyramids," in IEEE Int'l Conf on Image Proc. Italy, Sep. 2005, vol. I, pp. 105-108.]). the new noise PSD ($P_{w1}$) has the following expression:

$$P_{w1} = |G|^2 \cdot P_{w0}. \quad (4)$$

Once the first step has been applied, the improved image is obtained as a result of applying the noise elimination algorithm to the pre-filtered observation $Y_1$. The power spectral density of the pre-filtered noise, $P_{w1}$, is an input parameter to the noise elimination algorithm.

To optimise the results in terms of the squared error, it is proposed to couple both steps in such a way that the filter *G* is selected so that it minimises on average the squared error at the output of the noise elimination method with respect to the original signal. Thus, the optimum pre-filter *Ĝ* can be expressed as follows:

$$\hat{G} = \arg\min_{G}\left\{\mathrm{E}\{\|X - f(G \cdot Y)\|^2\}\right\} \quad (5)$$

where *f(G · Y)* is the result of applying the noise elimination method *f* (step 2) to the observation (*Y*), filtered with the pre-filter *G* (step 1). *Ĝ*, therefore, is the pre-filter that minimises the expected value of the Euclidean squared distance between the original image X and the final estimate *f(G · Y)*. The expected value of Equation (5) can be equivalently expressed as:

$$E\{\| X - f(G \cdot Y) \|^2\} = E\{\| [X - G \cdot H \cdot X] + [G \cdot H \cdot X - f(G \cdot Y)] \|^2\} \quad (6)$$

Considering that the error due to blurring is approximately uncorrelated to the error due to the residual noise at the output of step 2 (this has been empirically demonstrated in various examples using simulations, data not shown), the total squared error can be approximated as the sum of two squared errors, the first corresponding to the residual blurring of the result (estimated using standard techniques) and the second to the residual error of the result with respect to the pre-filtered obtained image:

$$E\{\| X - f(G \cdot Y) \|^2\} \cong E\{\| X - G \cdot H \cdot X \|^2\} + E\{\| G \cdot H \cdot X - f(G \cdot Y) \|^2\} \quad (7)$$

This solution can be applied, therefore, if there is a method of estimating the squared error at the output of the noise elimination algorithm used (second sum in the term to the right of Equation 7), which is a function of the image to which it is applied and the power spectral density of the noise that affects this image.
For those cases where such a model is not available, an alternative methodology can be proposed of minimising the global squared error based on training comprising:

- use of a pre-filter or compensation filter, *G*, depending on a single free parameter, and
- training and selection of the free parameter.

In place of estimating the filter without restrictions, as in the previous approximation, in this case the degrees of freedom are reduced to a single free parameter, therefore simplifying the training process. Specifically, a generalised Wiener filter (Equation 8) has been chosen as the starting point. This filter is very often used in restoration techniques, not only for prior compensation [R. Neelamani, H. Choi, and R. G. Baraniuk, "ForWaRD: Fourier-wavelet regularized deconvolution for ill-conditioned systems," IEEE Trans. Signal Proc., vol. 52, no. 2, pp. 418-433, Feb. 2004.], but also as a global solution [Biggs David and Meichle Michael, "Realtime 2D deconvolution system and method", US2005265621, 2005-12-01].

$$G = \frac{H^*}{|H|^2 + \alpha \cdot \dfrac{P_w}{P_x}} \quad (8)$$

This filter performs a regularised inversion with the parameter $\alpha$ that controls the suppression of noise/blurring. For values of the parameter close to zero, the intermediate image is very noisy (at the extreme, $\alpha = 0$, we have a pure inverse filter). For values close to 1, the filter destroys too many components of high and medium frequencies, giving images that are too soft from the point of view of a non-linear noise filtration. In fact $\alpha = 1$ corresponds to a Wiener filter, which is only adequate when both the signal and the noise are approximately Gaussian. It is therefore hoped that the value of the parameter is within the range (0, 1).
For training, a set of "typical" images is selected that are free of degradation and representative of the scenes that the device will capture. Each image of the set is degraded (typically numerically) in agreement with a specified PSF and an additive noise of given statistics. Note that, given that in this case optimisation is done empirically, no previous condition is demanded of the noise except its independence from the signal and its null average. With the information of the observation and the original, for each experiment the value of the parameter that minimises the squared error between the original and degraded image is calculated. To do this, the classical golden section search algorithm is used. Additionally, the security interval, within which the fidelity level does not decrease below a specific threshold (0.05-0.1dBs for example) with respect to the result of the optimum $\alpha$ obtained, is calculated. The optimum parameter on average is that value of $\alpha$ that maximises the number of experiments in which a quasi-optimum result is obtained, that is, a result within the fixed tolerance compared to the experimental optimum [J.A. Guerrero-Colon and J. Portilla, "Deblurring-by-denoising using spatially adaptive Gaussian scale mixtures in overcomplete pyramids," in IEEE Int'l Conf on Image Proc. Atlanta, Oct. 2006, Publication after October 2006].
The most immediate idea for processing the captured image is to have, for each functioning mode of the capture device, the PSF of the optics and the noise PSD ($P_{w0}$) stored in non-volatile memory. The device of the invention will use this information at the time of operation of the capture device, together with an estimate of the power spectral density of the original signal ($P_x$) starting from that observed in order to obtain the optimum pre-filter G adapted to each specific image. Once the pre-filter has been obtained, the image observed can be processed using the proposed scheme. However, and taking into account that the speed of the process is critical in this application, it is preferable to consider a PSD of the original signal ($P_x$) that is generic or estimated from a set of representative images of scenes typically captured by the device, and thus to be able to perform the optimisation of G "off-line" for a given noise PSD ($P_{w0}$) and PSF of the optics. In this way, for each functioning mode of the capture device, the already optimised pre-filter G is stored as well as the noise PSD affected by this pre-filter ($P_{w1}$, Equation 4) instead of directly storing the degradation parameters (PSF and noise PSD).

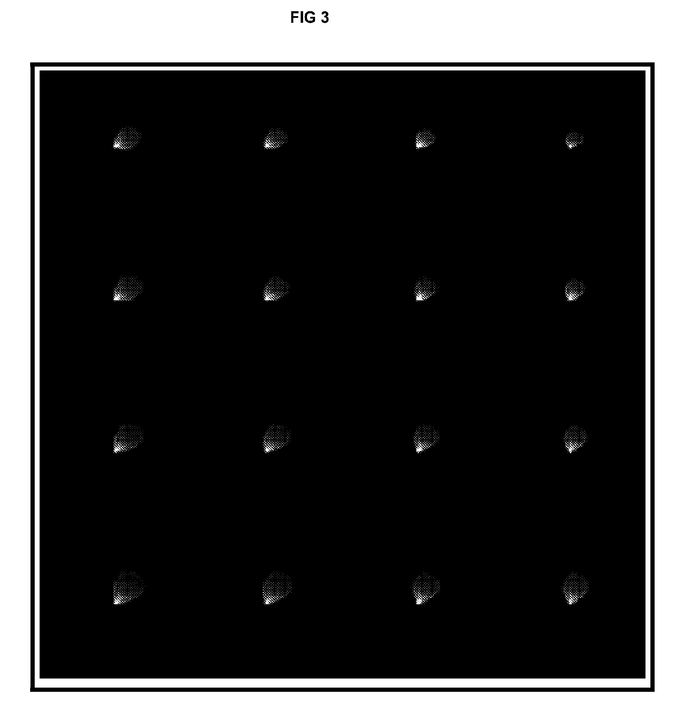

The solution described thus far models the degradation introduced by the optics as being spatially invariant, through a convolution. However, this is only an approximation, which, in certain optical systems such as in [George Nicholas, Chi Wanli, "Extended depth of field using a multi-focal length lens with a controlled range of spherical aberration and centrally obscured aperture", WO2006028527 -2006-03-16], is not applicable. The PSF varies slowly as we distance ourselves from the optical axis to eccentric positions at various angles, sometimes becoming a significant difference compared with the value at the axial position. Figure 3 shows the PSF of an example real optical system in various spatial positions. In this case, the optical axis is in the top right hand corner (PSF closes to a point) and varies gradually as we distance ourselves from this point. In order to improve the quality of images degraded in a spatially variable way, instead of storing a single PSF in the device (normally corresponding to the optical axis and to the image plane of best focus), it is proposed to store a 2-dimensional mesh of PSFs that correspond, in the extreme case, to each spatial position (each image pixel). However, this level of sampling is not normally necessary as the PSFs vary gradually (see Figure 3, for example) and it is sufficient to divide the image into blocks and use a PSF for each block, within which the PSF is assumed to be invariant. The device will restore each region locally in agreement with the corresponding PSFs stored in memory. In an analogous way to that already described for the spatially invariant case, it is much more efficient in practice to calculate the optimised pre-filters G for each spatial position "off-line" and store them in non-volatile memory. The statistics of noise, as it is affected by the spatially variable pre-filter, will also be different for each block, so the local PSDs of pre-filtered noise will also be stored in memory. Thus, applying Equation 4, each PSD corresponding to the region centred on the position (m,n) has the following expression:

$$P_{w1}(m,n) = |G(m,n)|^2 \cdot P_{w0} \ , \qquad (9)$$

with G(m,n) being the optimised pre-filter for the spatial position (m,n) that partially compensates the PSF corresponding to this position.

The restoration that has been proposed improves the captured image quality, assuming that they are in focus. That is, the stored PSFs characterise the optics of the device when the scene is perfectly focused (this patent assumes that the objects of the scene have a sufficiently large minimum distance from the image capture device that if they are not in focus, this is spatially approximately constant). If there is a source of information about the state of focus, the procedure is applicable to images captured out of focus, by simply storing the PSFs of the various focal planes (3D data structure where the third dimension corresponds to the focussing). Again, it is much more convenient in practice to store the calculated compensation filters "off-line" for each local PSF and each focus displacement and their corresponding pre-filtered noise PSDs, than to store the original PSFs and the noise PSD.

In summary, depending on the working conditions and the nature of the capture device, it is possible to calculate and store in memory prior to the capture operation:

   i) One single compensation filter. If it is supposed that the device optics has a behaviour that can be approximated or defined as spatially invariant and that the image is always in focus.
   ii) A 2D grid of compensation filters. If one wants to compensate for a different behaviour of the optics in each spatial position.
   iii) a 3D grid of compensation filters. If in addition to holding the description of spatially variable optics one also has information about the state of the focus and one wants to compensate numerically for the defocus.

Therefore, an object of the invention is a procedure for restoration of images for image capture systems that introduce noise and blurring into the images, hereinafter called the procedure of the invention, that, given a method of noise elimination in images and the capture device for all of its possible functioning modes, is **characterised in that:**

   a) measurement of the degradation introduced by the capture device by means of two sets of parameters: PSFs (Point Spread Function) and noise PSDs (Power Spectral Density),
   b) capture of the image,

c) calculation of the optimum pre-filtration for the degradation parameters characterised in (a) and for the image captured in (b) or on average for a set of training images, which minimises the average squared error at the output of the noise elimination method applied to the pre-filtered images,

d) storage in non-volatile memory prior to the operation of the device of two sets of parameters characterising the degradation introduced by the capture device, according to the following alternatives:

 i) measured degradation parameters in (a), PSFs and noise PSD (in this case, the calculation of the optimum pre-filtering of (c) is made at operation time and is not stored in non-volatile memory), or

 ii) optimum pre-filters calculated according to (c) using training images and corresponding noise PSDs,

e) application of the pre-filtration calculated in (c) to the image obtained in (b), and

f) application of the noise elimination method to pre-filtered images obtained in (e).

A particular object of the invention is the procedure of the invention in which the calculation method of the optimum pre-filtration in (c) is based on the existence of a model for predicting the squared error of the noise elimination method, which approximates the squared error as the sum of two squared errors, the first corresponding to the residual blurring of the result (estimated by standard techniques) and the second corresponding to the residual error of the result with respect to the image at the output of pre-filtration, that latter calculable by the squared error model of the noise elimination method.

Another object of the invention is the procedure of the invention in which an approximation to the method of optimum pre-filtration of (c) is obtained, which comprises the following stages:

 a) use of a pre-filtration depending on a single free parameter, and

 b) a training stage, where given one or several degradation conditions expressed as pairs (PSF/noise PSDs) and a set of pairs of original/degraded images, obtaining, for each pair of original/degraded images the value of the free parameter that minimise the squared error in restoration and a confidence interval around this value within which the quadratic error falls below a specific level of fidelity (typically around 0.1 decibels) with respect to the optimum found, and

 c) selection of the optimum parameter on average as that value of the free parameter that maximises the number of experiments for which said value does not exceed the safety interval corresponding to each experiment.

Another specific object of the invention is the procedure of the invention in which, for each of the possible functioning modes of the image capture device a single PSF (typically that corresponding to the optical axis and the image plane of best focus in optical systems) and a single noise PSD are used.

Another specific object of the invention is the procedure of the invention in which, in each of the possible functioning modes of the image capture device, a single noise PSD and various PSFs corresponding to different field spatial positions is used, reflecting variable spatial behaviour of the capture device and which gives rise to a differential pre-filtration for each spatial location within the captured image.

Another specific object of the invention is the procedure of the invention in which, the PSFs corresponding to various focus positions, for each position considered to be in the image plane, together with the noise PSD are added to the device characterisation, which gives rise to a different pre-filtration for each focal position and each spatial location within the captured image.

Another specific object of the invention is the procedure of the invention in which the calculation of the optimum pre-filtration is made with training images in place of with the captured image and in which, for each of the possible functioning modes of the image capture device, the following are stored in memory:

 a) calculated pre-filters for a set of training images in place of the PSFs, and

 b) PSDs resulting from the noise pre-filtration with their corresponding pre-filters, in place of the original PSD.

Another specific object of the invention is the procedure of the invention in which the selection of the parameters stored previously in the non-volatile memory and access and use in real time is made according to:

 a) the functioning mode of the capture device,

 b) the spatial position in the plane of the image

 c) information available on the state of focus of the capture device.

The present invention enables the design of generically pre-programmable hardware that can be easily integrated into image capture devices with the aim of providing images of higher quality for the same cost, this measured both visually and in terms of average squared error with respect to an original (see results of simulations in [J.A. Guerrero-Colon and J. Portilla, "Deblurring-by-denoising using spatially adaptive Gaussian scale mixtures in overcomplete pyramids," in IEEE Int'l Conf on Image Proc. Atlanta, Oct. 2006, Publication after October 2006]). In this way, a opto-electronic image capture device can be manufactured with significant cost reduction and weight reduction, maintaining a quality similar to devices with more sophisticated optics.

Thus, another object of the present invention is a generic device of the opto-electronic system that accommodates the elements required for the operation of the procedure of the invention, hereinafter called the device of the invention, which comprises:

A) opto-electronic device or capture body, which comprises an optical system of lenses (A1), an electronic acquisition sensor (A2) including a detector matrix (A21) and the reading electronics (A22), and a digital recording system (A3).
B) a hardware-firmware processing unit (B1), which has a memory (B12), where the required data are stored, and a digital microprocessor (B11), which executes the instructions on the data previously stored (characterisation of the degradation sources) and those captured by the sensor. Note that the capture device and the processing system do not have to be in the same physical device.
C) Peripheral viewer for the final obtained image.

The present invention starts from the premise that the optical characteristics of the capture device (PSF) are known and is centred on the procedure for restoration, and is not limited at any time to a specific type of image capture device nor to a range of wavelength nor to a specific type of degradation. The only conditions that are demanded of the image capture device are that (1) the blurring of the captured image be the effect of a linear function (and therefore capable of characterisation by a PSF, although this may vary in each spatial position); and (2) the noise generated be capable of being modelled as additive.

Where in the present invention the term "image capture device" has been used, reference is being made to a device, preferably opto-electronic, CCD or CMOS in nature, for any electromagnetic spectrum band, for example visible or infrared, belonging, for illustrative purposes and without limiting the scope of the invention, to the following group: digital cameras, small webcams, PDAs and mobile phones.

It is also not required that the processing electronics be integrated into the same image capture device. For example, the capture device may be located in a satellite in orbit and the processing electronics may be located in the data reception centre.

**BRIEF DESCRIPTION OF THE FIGURES AND TABLES**

**Figure 1.- Generic device of the hybrid opto-electronic system.** This figure shows the hybrid opto-electronic device hosting the procedure of the invention. The device is divided into two main parts, the capture device and the processing hardware-firmware. **A)** Opto-electronic device or capture body, comprising an optical system of lenses (A1), an electronic acquisition sensor (A2) including a detector matrix (A21) and the reading electronics (A22), and a digital recording system (A3). **B)** An electronic processing unit (B1), which has a memory (B12), where the required data are stored, and a digital microprocessor (B11), which executes the instructions on the data previously stored (parameters that characterise the degradation sources and/or the corresponding optimum pre-filtrations) and those captured by the sensor. Note that the capture device and the processing system do not have to be in the same physical device. Finally, the device presents an output for viewing the final image **(C)**.

**Figure 2.- Scheme for the procedure of the invention in two steps.** This figure shows the basic scheme for the procedure of the invention for the restoration of images. Starting from the degraded digital image ($I_0$), a prior compensation for blurring is performed or pre-filtration of the degraded image (A, Step 1), and then noise elimination of the pre-filtered image (B, Step 2). The restored image ($I_F$) is obtained at the output of the procedure.

**Figure 3.- Description of spatially variable optics.** This figure shows the PSF corresponding to various spatial positions. The optical axis in this case is located in the top right corner.

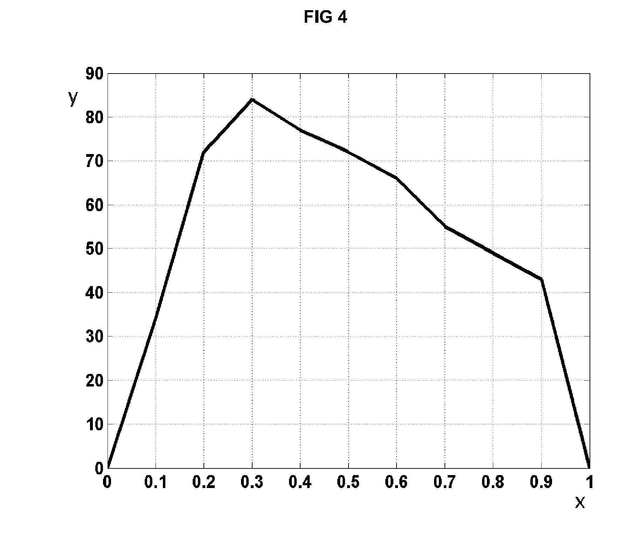

**Figure 4.- Optimisation index for each value of the free parameter ($\alpha$).** In the context of empirical optimisation of the pre-filter, the percentage of experiments for which this value does not fall outside the safety interval is shown. The x axis represents the free parameter $\alpha$ and the y axis is the optimisation index (%).

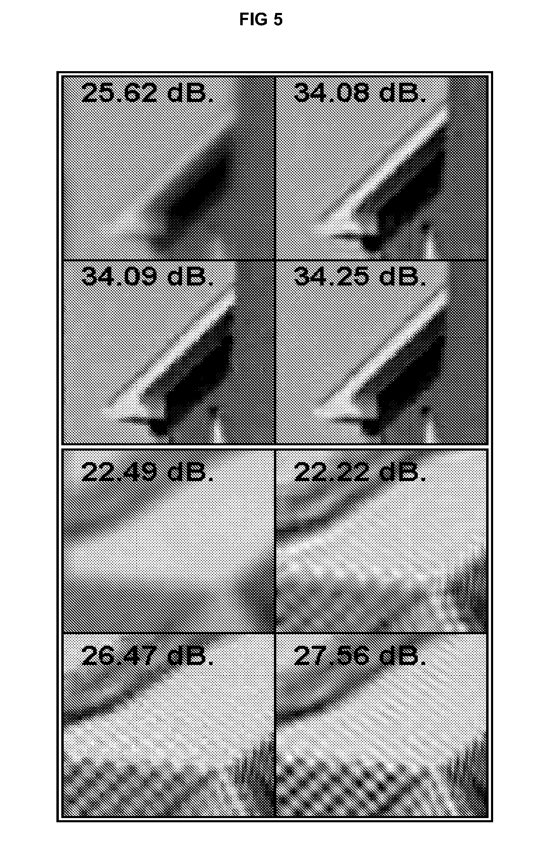

**Figure 5.- Visual comparison of the results on two test images, House and Barbara (80x80 pixel region).** From left to right and from top to bottom: Degraded: House filtered with PSF1 and added noise of variance 2; Barbara with PSF2 and variance 0.308; Restored with the method of Portilla and Simoncelli [J. Portilla and E. P. Simoncelli, "Image restoration using Gaussian scale mixtures in the wavelet domain," in Proc IEEE Int'l Conf on Image Proc. September 2003, vol. 2, pp. 965-968] using the FSP representation; Restored with the method of Figueiredo and Nowak [M. Figueiredo and R. Nowak, "An EM algorithm for wavelet based image restoration," IEEE Trans. Image Proc., vol. 12, no. 8, pp. 906-916, Aug. 2003]; Restored with the procedure of the invention [J.A. Guerrero-Colon and J. Portilla, "Deblurring-by-denoising using spatially adaptive Gaussian scale mixtures in overcomplete pyramids," in IEEE Int'l Conf on Image Proc. Atlanta, Oct.2006, Publication after October 2006]: House using THP and Barbara FSP. The numerical values indicate Peak Signal-to-Noise Ratio (PSNR). As can be observed, both in terms of PSNR and visually (see the line of the roof in House and the tablecloth in Barbara), the procedure of the invention in these examples exceeds the best results published to date.

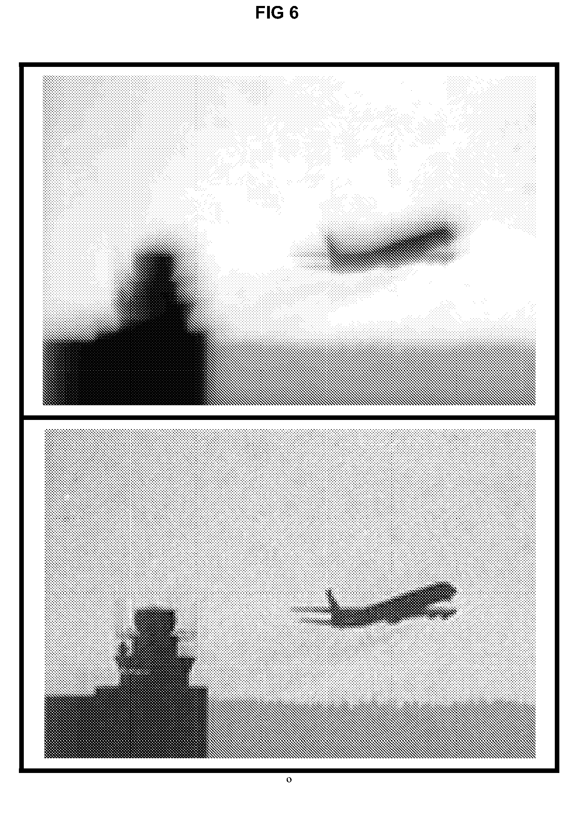

**Figure 6.- Visual result of the real application of the procedure of the invention.** Image of a text book taken with a Hamamatsu CCD camera.

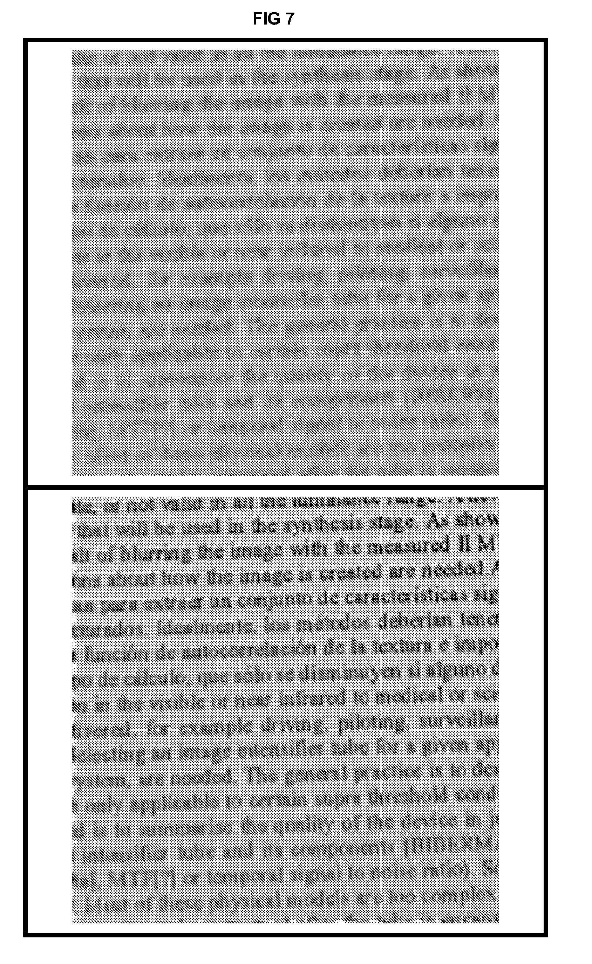

**Figure 7.- Visual result of the real application of the procedure of the invention.** Image of a micro-display showing a scene of an aircraft taken by a Hamamatsu CCD camera.

## EXAMPLES OF EMBODIMENT OF THE INVENTION

Practical examples of embodiment of the invention are described below, which should be understood to be non-limiting.

### Example 1.- Application of the procedure to simulated degraded images.

Figure 1 shows a typical schema of a specific digital opto-electronic hybrid system constructed for the present invention, where the hardware and firmware electronic elements required to execute the procedure of the present invention have been implemented. At a high level, the system comprises:

- An optical component that includes a lens system,
- A component for the capture of digital images: for example, CCD or CMOS, and
- An electronic component with the required processing elements, comprising at least a memory and a digital microprocessor.

In this example of the procedure of the invention for the restoration of images, a set of standard test images ("House", "Cameraman", "Boats" and "Barbara") were degraded by numerical simulation using a set of Gaussian PSFs with typical deviations of 1, 2, 4, 8 and 16 and a plane Gaussian white noise PSD of null average with typical deviations of 0.4, 0.8, 1.6 and 3.2. The method of noise elimination was that described in [J.A. Guerrero-Colon and J. Portilla, "Two-level adaptive denoising using Gaussian scale mixtures in overcomplete oriented pyramids," in IEEE Int'l Conf on Image Proc. Italy, Sep. 2005, vol. I, pp. 105-108.]), which is a spatially adaptive (by blocks) version of the powerful non-linear algorithm described in [J. Portilla, V. Strela, M. Wainwright, and E. P. Simoncelli, "Image denoising using scale mixtures of Gaussians in the wavelet domain," IEEE Trans. Image Proc., vol. 12, pp. 1338-1351, Nov. 2003]. Blocks of 32x32 pixels were used and two different pyramidal representations, one with 3 orientations (THP) and the other with 8 orientations (FSP), both with 4 scales (more details in [J.A. Guerrero-Colon and J. Portilla, "Deblurring-by-denoising using spatially adaptive Gaussian scale mixtures in overcomplete pyramids," in IEEE Int'l Conf on Image Proc. Atlanta, Oct. 2006, Publication after October 2006]).

The optimisation of pre-filtration was made empirically for all the PSFs considered jointly, for the set of images used and for all the levels of noise, giving rise to a total of 80 experiments (4 images x 5 PSFs x 4 noise PSDs). In this case, a single and generic pre-filtration solution was being sought. Note that it would have been possible to obtain a smaller average squared error in the estimation of the original images if the training had been performed separately for each PSF and noise PSD considered (at the cost of losing generality in the solution). The values of the free parameter $\square$ were taken equi-spaced in width intervals of 0.1 and the safety interval around each individual optimum was chosen to be a fall of 0.05 decibels in the signal to noise ratio (SNR) of the result with respect to that obtainable with optimum $\square$. Figure 4 shows the optimisation index, that is, the percentage of experiments that provided a quasi-optimal result (according to the described tolerance) for each value of $\square$. The optimum value of the free parameter of the pre-filtration was $\square$ $\square$0.3, for which an optimisation index of 84% was obtained. Such a high percentage was considered to be a positive indication in terms of the robustness and generality of the method given the high variability introduced in this case both in the widths of the PSF and the noise levels.

Table 1 shows the average increase, for the set of images used, in the SNR obtained (in decibels) with respect to the SNR of the simulated degraded observation, for the various degradation conditions used. Although in this simulation the same test images were used for training as for measurement of the performance of the method, it was checked that the optimum value of the free parameter of the pre-filtration did not vary, for the sampling intervals used, if the test image was excluded in the training. That is, it was demonstrated that the result was not affected by over-training ("over-fitting").

**Table 1.- Increase in the average signal to noise ratio (ISNR) for the training set experiments.**

| | σ | NOISE | | | | |
|---|---|---|---|---|---|---|
| | | 1 | 2 | 4 | 8 | 16 |
| B | 0.4 | 2.86 | 1.86 | 2.81 | 5.03 | 7.63 |
| L | 0.8 | 6.65 | 4.84 | 3.73 | 3.92 | 5.85 |
| U | 1.6 | 3.87 | 3.18 | 2.72 | 3.01 | 4.73 |
| R | 3.2 | 3.21 | 2.85 | 2.56 | 2.66 | 3.87 |

Each experiment was a combination of:

- Images: House, Cameraman, Barbara, Boat and Lena

- PSF: Gaussians with spreads (σ): 0.4, 0.8 1.6 and 3.2.

- Noise: Gaussian white noise with standard deviations: 1, 2, 4, 8 and 16.

To further test the robustness of the described method, the applicability of the result of empirical optimisation of the pre-filtration above was checked against other different degradation conditions to those used in said optimisation. To do this, a set of additional experiments was performed with three of the five test images used above and some PSFs and noise PSDs used in the literature of image restoration. This enabled us to perform an objective comparison with other methods in terms of the average squared error of the restoration. All the noise PSDs were constant (white noise) and Gaussian additive noise was used. The first PSF (PSF1) has the form $1/(1 + i^2 + j^2)$, with i,j = -7...7, normalised at 1 in volume, and variances were applied to the noise of 2 and 8. PSF2 was uniform in a squared format of 9x9 pixels and was applied with noise of variance 0.308. PSF3 was a binomial 5x5 filter and was used with noise of variance 49. The results obtained by the procedure of the invention are shown in Table 2, comparing the best noise elimination results in simulations that have been found in recent literature [M. Figueiredo and R. Nowak, "A bound optimization approach to wavelet-based image deconvolution," in IEEE Int'l Conf on Image Proc, 2005, vol. 2, pp. 782 - 785.; J. Portilla and E. P. Simoncelli, "Image restoration using Gaussian scale mixtures in the wavelet domain," in Proc IEEE Int'l Conf on Image Proc, Barcelona, Spain, September 2003, vol. 2, pp. 965-968; M. Figueiredo and R. Nowak, "An EM algorithm for wavelet based image restoration," IEEE Trans. Image Proc., vol. 12, no. 8, pp. 906-916, Aug. 2003.; J. Bioucas-Dias, "Bayesian wavelet-based image deconvolution: a gem algorithm exploiting a class of heavy-tailed priors," IEEE Trans. Image Proc., vol. 15, no. 4, pp. 937-951, Apr. 2006.]. Table 2 also includes for comparison, two of the Gaussian PSFs used in the optimisation pre-filtration step: PSF4 and PSF5 are Gaussian filters with typical deviations of 1.6 and 0.4 respectively and were applied with noise variances of 4 and 64 respectively. According to these results, the procedure of the present invention of image restoration provides the best results in 2 out of 3 (66.7%) of these restoration experiments.

**Table 2.- Comparison of our method (E) with other methods of the state of the art (A, B, C, D) in terms of ISNR.**

| Blur | PSF 1 | | PSF 2 | PSF 3 | PSF 4 | PSF 5 |
|---|---|---|---|---|---|---|
| $\sigma_{u1} \Rightarrow$ | $\sqrt{2}$ | $\sqrt{8}$ | $\sqrt{0,308}$ | 7 | 2 | 8 |
| Method | CAMERAMAN | | | | | |
| A | **7.46** | 5.24 | **8.16** | 2.84 | 3.18 | 3.65 |
| B | 6.84 | 5.29 | -1.61 | 2.56 | 2.83 | 3.81 |
| C | 6.93 | 4.88 | 7.59 | **2.94** | -/- | -/- |
| D | 7.40 | 5.15 | 8.10 | 2.85 | -/- | -/- |
| E | 7.45 | 5.55 | 7.33 | 2.73 | **3.25** | **4.19** |

(continued)

| Method | HOUSE | | | | | |
|---|---|---|---|---|---|---|
| A | 8.47 | 6.63 | **10.71** | 4.22 | **4.49** | 4.76 |
| B | 8.46 | 6.93 | -0.44 | **4.37** | 4.34 | 5.98 |
| E | **8.64** | 7.03 | 9.04 | 4.30 | 4.11 | **6.02** |
| Method | BARBARA | | | | | |
| A | 3.76 | 1.99 | 3.98 | 0.9 | 0.92 | 2.55 |
| B | 5.70 | 3.28 | -0.27 | 1.44 | 0.95 | 4.91 |
| E | **6.85** | 3.80 | 5.07 | **1.94** | **1.36** | **5.27** |

- Method A: M. Figueiredo and R. Nowak, "A bound optimization approach to wavelet-based image deconvolution," in IEEE Int'l Conf on Image Proc, 2005, vol. 2, pp. 782 - 785.;

- Method B: J. Portilla and E. P. Simoncelli, "Image restoration using Gaussian scale mixtures in the wavelet domain," in Proc IEEE Int'l Conf on Image Proc, September 2003, vol. 2, pp. 965-968;

- Method C: M. Figueiredo and R. Nowak, "An EM algorithm for wavelet based image restoration," IEEE Trans. Image Proc., vol. 12, no. 8, pp. 906-916, Aug. 2003.;

- Method D: J. Bioucas-Dias, "Bayesian wavelet-based image deconvolution: a gem algorithm exploiting a class of heavy-tailed priors," IEEE Trans. Image Proc., vol. 15, no. 4, pp. 937-951, Apr. 2006.

- Method E: J.A. Guerrero-Colon and J. Portilla, "Deblurring-by-denoising using spatially adaptive Gaussian scale mixtures in overcomplete pyramids," in IEEE Int'l Conf on Image Proc. Atlanta, Oct. 2006, Publication after October 2006.

Figure 5 shows two visual examples of the results obtained with the procedure of the invention (lower right quadrant) together with the degraded image (upper right quadrant) and the results obtained with other immediately competing procedures (the other two quadrants). A significant visual improvement compared with the results of competing procedures can be seen in both cases.

**Example 2.- Application of the procedure to real degraded images.**

In this third example, the restoration procedure is applied to images taken with capture devices that have low quality optics or optics not correctly adjusted (focus, alignment, etc.). A Hamamatsu CCD camera was used. To simulate a strong optical degradation, an achromatic doublet was used, obtained from binoculars, manually centred and aligned. Experiments were carried out on two images: the first of a page of text and the second from a micro-display showing a scene with an aircraft. Both images were of monochromatic light, the first by being illuminated with a strong light source filtered with an interferential 500nm filter (green) and the second by having placed the same filter in front of the micro-display. To reduce the effect of noise, 30 photographs of each image were taken and these were averaged afterwards. The PSF was estimated using a back-lit "pinhole" using monochromatic light of the same wavelength as above. Fifteen photographs were taken and they were averaged and normalised for estimation. The noise PSD in both cases approximated to white noise and its variance was estimated selecting uniform zones in the images and taking the sample variance. Applying the empirical method for optimisation of the free parameter of pre-filtration, a value for alpha of 0.48 was obtained. For the elimination of noise, the method described in [J.A. Guerrero-Colon and J. Portilla, "Two-level adaptive denoising using Gaussian scale mixtures in overcomplete oriented pyramids," in IEEE Int'l Conf on Image Proc. Italy, Sep.2005, vol. I, pp. 105-108.]) was used with a trapezoidal Haar pyramid (THP) for the representation with 4 scales and using 3x3 coefficients in neighbourhoods without parent coefficient. Figure 6 shows the image of the micro-display before and after being processed. The result demonstrates the power of the procedure of the invention applied in real conditions. In this case, the image subtended a small angle, so it was sufficient to characterise the optical system with a single PSF (spatially invariant approximation). However, in the case of the image of the text, the angle was much higher, which resulted in the result (see Figure 7) not having a spatially uniform quality but with highest quality in the centre of the image where the PSF was estimated. This demonstrates the need to use a spatially varying characterisation of the PSF in some cases.

**Claims**

1. Procedure for restoration of images for image capture systems that introduce noise and blurring into the images that, given a method of noise elimination in images and in the capture device for all its possible functioning modes, is **characterised in that** it includes:

> a) measurement of the degradation, introduced by the capture device, by means of two sets of parameters: PSFs (Point Spread Function) and noise PSDs (Power Spectral Density),
> b) capture of the image,
> c) calculation of the optimum pre-filtration for the degradation parameters **characterised in** (a) and for the image captured in (b) or on average for a set of training images, which minimises the average squared error at the output of the noise elimination method applied to the pre-filtered images,
> d) storage in non-volatile memory prior to the operation of the device of two sets of parameters characterising the degradation introduced by the capture device, according to the following alternatives:
>
> > i) measured degradation parameters in (a) PSFs and noise PSD (in this case, the calculation of the optimum pre-filtering of (c) is made at operation time and is not stored in non-volatile memory), or
> > ii) optimum pre-filters calculated according to (c) using training images and corresponding noise PSDs,
>
> e) application of the pre-filtration calculated in (c) to the image captured in (b), and
> f) application of the noise elimination method to pre-filtered images obtained in (e).

2. Procedure according to claim 1, **characterised in that** the calculation method of the optimum pre-filtration in (c) is based on the existence of a model for predicting the squared error of the noise elimination method, which approximates the squared error as the sum of two squared errors, the first corresponding to the residual blurring of the result (estimated by standard techniques) and the second corresponding to the residual error of the result with respect to the image at the output of pre-filtration, that latter calculable by the squared error model of the noise elimination method.

3. Procedure according to claim 1, **characterised in that** obtaining an approximation to the method of optimum pre-filtration of (c) it comprises the following stages:

> a) use of a pre-filtration depending on a single free parameter, and
> b) a training stage, where given one or several degradation conditions expressed as pairs (PSF/noise PSDs) and a set of pairs of original/degraded images, obtaining, for each pair of original/degraded images the value of the free parameter that minimise the squared error in restoration and a confidence interval around this value within which the quadratic error falls below a specific level of fidelity (typically around 0.1 decibels) with respect to the optimum found, and
> c) selection of the optimum parameter on average as that value of the free parameter that maximises the number of experiments for which said value does not exceed the safety interval corresponding to each experiment.

4. Procedure according to claim 1, **characterised in that** for each of the possible functioning modes of the image capture device a single PSF (typically that corresponding to the optical axis and the image plane of best focus in optical systems) and a single noise PSD are used.

5. Procedure according to claim 1, **characterised in that** in each of the possible function modes of the image capture device, a single noise PSD and various PSFs corresponding to different field spatial positions is used, reflecting variable spatial behaviour of the capture device and which gives rise to a differential pre-filtration for each spatial location within the captured image.

6. Procedure according to claims 1, 4 and 5, **characterised in that** the PSFs corresponding to various focus positions, for each position considered to be in the image plane, together with the noise PSD are added to the device characterisation, which gives rise to a different pre-filtration for each focus position and each spatial location within the captured image.

7.  Procedure according to claims 1 to 6, **characterised in that** the calculation of the optimum pre-filtration (claim 1 (c)) is made with training images in place of the captured image, and **in that**, for each of the possible functioning modes of the image capture device, the following are stored in memory:

    a) calculated pre-filters for a set of training images in place of the PSFs, and
    b) PSDs resulting from the noise pre-filtration with their corresponding pre-filters, in place of the original PSD.

8.  Procedure and device for image restoration in image capture systems according to claims 1 to 7, **characterised in that** selection of parameters to be previously stored in non-volatile memory and their access in operation time depends on:

    a) the functioning mode of the capture device,
    b) the spatial position in the plane of the image,
    c) information available on the state of focus of the capture device.

9.  Opto-electronic device **characterised in that** it comprises the following components for performing the procedure according to claims 1 to 8:

    i) opto-electronic device or capture body, comprising an optical system of lenses, an electronic acquisition sensor including a detector matrix and reading electronics, and a digital recording system,
    ii) hardware-firmware processing unit that has a memory for storing the required data, and a digital microprocessor that executes the instruction on data previously stored and those captured by the sensor, and
    iii) peripheral viewer for the final obtained image.

10. Opto-electronic device according to claim 9, **characterised in that** the device belongs to the following group: digital cameras, webcams, PDAs and mobile phones.

11. Opto-electronic device according to claim 9, **characterised in that** the electronic acquisition sensor belongs to the following group: CCD and CMOS.

12. Opto-electronic device according to claims 10 and 11, **characterised in that** the capture device and the processing system are not in the same physical device.

**FIG 1**

**FIG 2**

**FIG 3**

**FIG 4**

**FIG 5**

**FIG 6**

**FIG 7**

## INTERNATIONAL SEARCH REPORT

| | International application No. |
|---|---|
| | PCT/ ES 2007/070147 |

**A. CLASSIFICATION OF SUBJECT MATTER**

*G06T 5/00* (2006.01)

According to International Patent Classification (IPC) or to both national classification and IPC

**B. FIELDS SEARCHED**

Minimum documentation searched (classification system followed by classification symbols)

G06T5/00

Documentation searched other than minimum documentation to the extent that such documents are included in the fields searched

Electronic data base consulted during the international search (name of data base and, where practicable, search terms used)

CIBEPAT,EPODOC,WPI

**C. DOCUMENTS CONSIDERED TO BE RELEVANT**

| Category* | Citation of document, with indication, where appropriate, of the relevant passages | Relevant to claim No. |
|---|---|---|
| A | GB 2377842 A (CAHILL MARK DAVID) 22.01.2003, | 1 |
| A | EP 0959433 A2 (ITT MFG ENTERPRISES INC) 24.11.1999, | 1 |
| A | WO 2004063989 A2 (BLUR TECHNOLOGIES LTD D ; ALON ALEX ; ALON IRINA) 29.07.2004, | 1 |
| A | WO 2005031645 A1 (COMMW SCIENT IND RES ORG ; GUREYEV TIMUR EUGENIEVICH ;) 07.04.2005, | 1 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 26.November.2007        (26.11.2007) | (11/12/2007) |
| Name and mailing address of the ISA/ O.E.P.M. | Authorized officer |
| Paseo de la Castellana, 75 28071 Madrid, España. Facsimile No.   34 91 3495304 | Mª C. González Vasserot Telephone No. +34 91 3493087 |

Form PCT/ISA/210 (second sheet) (April 2007)

## INTERNATIONAL SEARCH REPORT

Information on patent family members

| International application No. |
| --- |
| PCT/ ES 2007/070147 |

| Patent document cited in the search report | Publication date | Patent family member(s) | Publication date |
| --- | --- | --- | --- |
| GB 2377842 A B | 22.01.2003 | NONE | ------------ |
| EP 0959433 A | 24.11.1999 | EP 19990109872<br>US 6295392 B<br>US 2001024534 A<br>US 6483952 B | 19.05.1999<br>25.09.2001<br>27.09.2001<br>19.11.2002 |
| WO 2004063989 A | 29.07.2004 | EP 1584067 A<br>EP 20040702400<br>KR 20050107741 A<br>CN 1739118 A<br>EP 1672912 A<br>EP 20060111394<br>JP 2006519527 T<br>US 2006256226 A | 12.10.2005<br>15.01.2004<br>15.11.2005<br>22.02.2006<br>21.06.2006<br>15.01.2004<br>24.08.2006<br>16.11.2006 |
| WO 2005031645 A | 07.04.2005 | NONE | ------------ |

Form PCT/ISA/210 (patent family annex) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005265621 A
- WO 2005076774 A
- US 2005249429 A
- EP 1522961 A
- WO 2006028527 A

**Non-patent literature cited in the description**

- **R. MOLINA ; J. MATEOS ; A.K. KATSAGGELOS ; M. VEGA.** Bayesian multichannel image restoration using compound gauss-markov random fields. *IEEE Trans. Image Proc.,* December 2003, vol. 12 (12), 1642-1654
- **M. FIGUEIREDO ; R. NOWAK.** A bound optimization approach to wavelet-based image deconvolution. *IEEE Int'l Conf on Image Proc,* 2005, vol. 2, 782-785
- **J. BIOUCAS-DIAS.** Bayesian wavelet-based image deconvolution: a gem algorithm exploiting a class of heavy-tailed priors. *IEEE Trans. Image Proc.,* April 2006, vol. 15 (4), 937-951
- **M. R. BANHAM ; A. K. KATSAGGELOS.** Spatially adaptive wavelet-based multiscale image restoration. *IEEE Trans. Image Proc.,* April 1996, vol. 5, 619-634
- **R. NEELAMANI ; H. CHOI ; R. G. BARANIUK.** ForWaRD: Fourier-wavelet regularized deconvolution for ill-conditioned systems. *IEEE Trans. Signal Proc.,* February 2004, vol. 52 (2), 418-433
- Mini-max restoration and deconvolution. **J. KALIFA ; S. MALLAT.** Bayesian inference in wavelet based methods. Springer, 1999
- **A. JALOBEANU ; N. KINGSBURY ; J. ZERUBIA.** Image deconvolution using hidden markov tree modeling of complex wavelet packets. *IEEE Int'l Conf on Image Proc,* 2001, vol. 1, 201-204
- **R. MOLINA ; J. MATEOS ; A.K. KATSAGGELOS ; M. VEGA.** Bayesian multichannel image restoration using compound gauss-markov random fields. *IEEE Trans. Image Proc.,* December 2003, vol. 12 (12), 1642-1654
- **M. FIGUEIREDO ; R. NOWAK.** A bound optimization approach to wavelet-based image deconvolution. *IEEE Int'l Conf on Image Proc,* 2005, vol. 2, 782-785

- **A. JALOBEANU ; N. KINGSBURY ; J. ZERUBIA.** Image deconvolution using hidden Markov tree modeling of complex wavelet packets. *IEEE Int'l Conf on Image Proc,* 2001, vol. 1, 201-204
- **J.A. GUERRERO-COLON ; J. PORTILLA.** Two-level adaptive denoising using Gaussian scale mixtures in overcomplete oriented pyramids. *IEEE Int'l Conf on Image Proc. Italy,* September 2005, vol. I, 105-108
- **J.A. GUERRERO-COLON ; J. PORTILLA.** Deblurring-by-denoising using spatially adaptive Gaussian scale mixtures in overcomplete pyramids. *IEEE Int'l Conf on Image Proc. Atlanta,* October 2006
- **J. PORTILLA ; V. STRELA ; M. WAINWRIGHT ; E. P. SIMONCELLI.** Image denoising using scale mixtures of Gaussians in the wavelet domain. *IEEE Trans. Image Proc.,* November 2003, vol. 12, 1338-1351
- **J. PORTILLA ; E. P. SIMONCELLI.** Image restoration using Gaussian scale mixtures in the wavelet domain. *Proc IEEE Int'l Conf on Image Proc.,* September 2003, vol. 2, 965-968
- **M. FIGUEIREDO ; R. NOWAK.** An EM algorithm for wavelet based image restoration. *IEEE Trans. Image Proc.,* August 2003, vol. 12 (8), 906-916
- **J.A. GUERRERO-COLON ; J. PORTILLA.** Two-level adaptive denoising using Gaussian scale mixtures in overcomplete oriented pyramids. *IEEE Int'l Conf on Image Proc. Italy,* September 2005, 105-108
- **J. PORTILLA ; E. P. SIMONCELLI.** Image restoration using Gaussian scale mixtures in the wavelet domain. *Proc IEEE Int'l Conf on Image Proc,* September 2003, vol. 2, 965-968